# EUROPÄISCHE PATENTSCHRIFT

(11) **EP 1 132 223 B1**
(45) Veröffentlichungstag und Bekanntmachung des Hinweises auf die Patenterteilung: **23.07.2003**
(21) Anmeldenummer: 01104967.3
(22) Anmeldetag: 01.03.2001
(51) Int. Cl.: B60H 1/00, H02K 11/04, F04D 27/02

(54) **Verfahren zum Schützen eines Gebläsemotors vor Überhitzung**
Method for protecting a fan motor from overheating
Procédé de protection d'un moteur d'un ventilateur contre un suréchauffement

(30) Priorität: 03.03.2000 DE 10010623
(43) Veröffentlichungstag der Anmeldung: 12.09.2001
(73) Patentinhaber: Behr-Hella Thermocontrol GmbH, D-70469 Stuttgart (DE)
(72) Erfinder: Knittel, Otto, Dipl.-Ing., 59494 Soest (DE); Röhling, Hans-Dieter, Dipl.-Ing., 59558 Lippstadt (DE)
(74) Vertreter: Hilleringmann, Jochen, Dipl.-Ing.

(56) Entgegenhaltungen:
- EP-A- 0 681 360
- DE-A- 4 016 663
- DE-A- 4 209 167

## Beschreibung

Die Erfindung betrifft ein Verfahren zum Schützen eines Gebläsemotors zum Erzeugen eines Luftstroms, der in den Innenraum eines Fahrzeuges zu leiten ist. Ferner betrifft die Erfindung eine Klimaanlage für ein Fahrzeug mit einem derartigen Gebläse.

Die Gebläse der Lüftungsanlagen von Fahrzeugen weisen einen Motor auf, der das Lüfterrad drehend antreibt. Die Ansteuerung des Motors, d.h. die Versorgung des Motors mit elektrischer Energie erfolgt über eine Elektronik, die mindestens einen Treibertransistor aufweist. Eine derartige Ansteuerungselektronik ist aus DE 91 06 035 U1 bekannt.

Zum Schutz des Treibertransistors bzw. zum Schutz jedes Treibertransistors sind diese jeweils mit einem Übertemperaturschutz versehen. Grundsätzlich ist es wünschenswert, den Motor im Falle einer Blockierung automatisch abzuschalten. Eine solche Blockierung kann beispielsweise aufgrund von Lagerschäden oder anderen mechanischen Beeinträchtigungen des Gebläses auftreten. Im Stand der Technik ist dazu bekannt, den Motor mit einem Bimetall-Schalter zu versehen, der bei Überhitzung des Motors, was auf eine Überbelastung des Motors beispielsweise aufgrund eines Blockierens schließen lässt, automatisch ausschaltet. Ferner sind Lösungsansätze im Stand der Technik bekannt, bei denen in der Ansteuerungselektronik die Spannung über dem Motor und der den Motor durchfließende Strom ermittelt werden. Daraus kann die momentane elektrische Leistung des Motors ermittelt werden. In einem Kennfeld sind die den Treibertransistoransteuerungen entsprechenden elektrischen Verluste des Motors abgelegt. Weicht bei der gerade gewählten Ansteuerung der Treibertransistoren die Ist-Verlustleistung des Motors von den Kennfelddaten ab, wird der Motor automatisch abgeschaltet bzw. geringer bestromt.

Beide im Stand der Technik bekannten Lösungen sind verhältnismäßig aufwendig und erfordern zusätzliche Hardware bzw. Software und sind infolge dessen relativ kostenintensiv.

DE-A-40 16 663 offenbart ein Verfahren nach dem Oberbegriff des Anspruchs 1.

Der Erfindung liegt die Aufgabe zugrunde, ein Gebläse für das Lüftungssystem eines Fahrzeuges zu schaffen, das über einen vereinfachten Blockierschutz verfügt.

Zur Lösung dieser Aufgabe wird mit der Erfindung ein Verfahren gemäß Anspruch 1 vorgeschlagen.

Erfindungsgemäß ist bei diesem Verfahren vorgesehen, dass der Transistor mit dem Motor thermisch gekoppelt ist.

Wie bereits oben dargelegt, verfügen die den Motor ansteuernden Treibertransistoren im Regelfall über einen Temperaturschutz. Hierzu sind die Transistoren mit Temperatursensoren versehen, deren Ausgangsanschlüsse am Transistorgehäuse abgegriffen werden können. Überschreitet die Temperatur des Transistors einen vorgegebenen Schwellwert, wird der Treibertransistor automatisch abgeschaltet und schützt damit sowohl sich selbst als auch die von ihm mit elektrischer Energie versorgte Einheit, in diesem Fall den Gebläsemotor.

Erfindungsgemäß wird nun der Übertemperaturschutz des Treibertransistors dazu verwendet, um den Motor vor einer elektrischen Überbeanspruchungen zu schützen. Durch die thermische Kopplung des Motors mit dem Transistor nimmt dieser im Falle einer Überbelastung des Motors von diesem so viel Wärme auf, dass sein Übertemperaturschutz anspricht. Auf diese Weise ist also auch der Gebläsemotor vor einer elektrischen Zerstörung geschützt.

Das erfindungsgemäße Gebläse löst auf denkbar einfache Weise die Aufgabe des Schutzes des Motors vor einer "elektrischen Zerstörung", da hierfür einzig und allein eine thermische Kopplung zwischen mindestens einem der Treibertransistoren und dem Motor erforderlich ist, zusätzliche Hard- oder Software also nicht benötigt wird.

Der Gebläsemotor kann über ein oder mehrere Treibertransistoren, die als High-Side- oder Low-Side-Schalter als Halb- oder Vollbrücke geschaltet sind, angesteuert werden. Im Regelfall sind sämtliche Treibertransistoren jeweils mit einem Übertemperaturschutz versehen. Mindestens einer dieser Treibertransistoren ist also erfindungsgemäß thermisch mit dem Motor gekoppelt. Falls wünschenswert, können auch sämtliche oder mehrere als ein Treibertransistor mit dem Motor thermisch gekoppelt sein.

Zweckmäßig ist es, wenn der mindestens eine Treibertransistor mit dem Motorgehäuse thermisch gekoppelt ist, wobei in dem Fall, in dem der Transistor selbst über ein Kühlelement verfügt, es ferner zweckmäßig ist, wenn dieses Kühlelement thermisch mit dem Motorgehäuse gekoppelt ist. Eine thermische Kopplung zwischen Transistor und Motor wird in vorteilhafter Weise bereits dadurch realisiert, dass der elektrisch mit dem Motor zu verbindende Transistoranschluss direkt mit dem betreffenden Anschluss des Motors verbunden wird. Über diese elektrische Verbindung nimmt dann der Transistor vom Motor den im Überlastungsfalle zum Auslösen seines Übertemperaturschutzes erforderlichen Wärmestrom auf.

Nachfolgend wird die Erfindung anhand der Zeichnung näher erläutert. Im einzelnen zeigen:

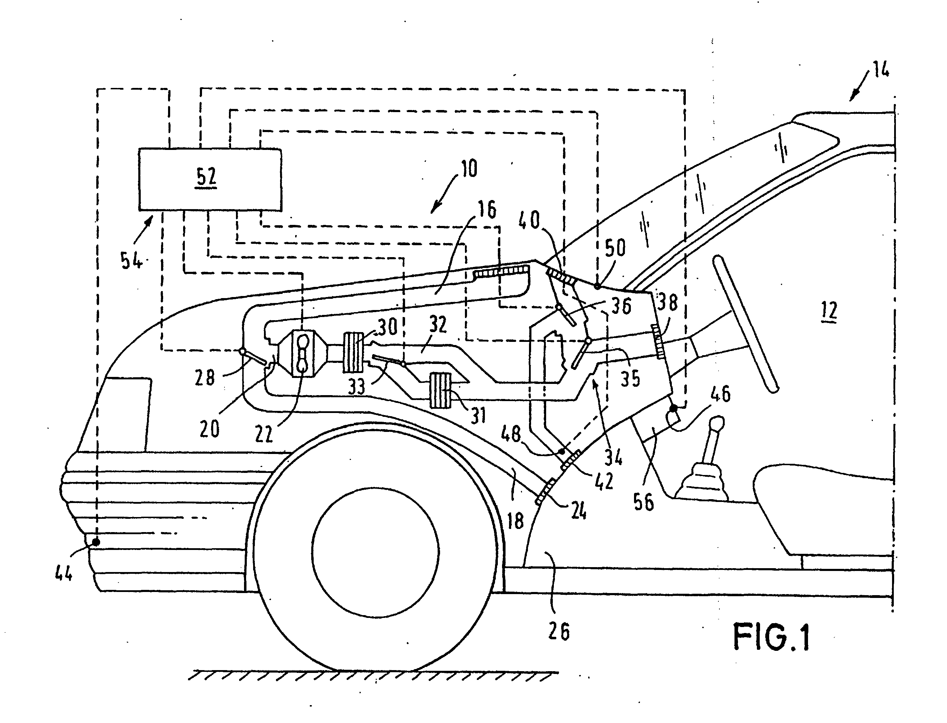

- Fig. 1: in Seitenansicht den vorderen Teil eines Fahrzeuges mit Klimaanlage (schematisch dargestellt) und
- Fig. 2: den konstruktiven Aufbau und die elektrische Beschaltung des Gebläsemotors.

Die Klimaanlage 10 zum Versorgen des Innenraums 12 des Fahrzeuges 14 weist einen Außenluft/Frischluft-Ansaugkanal 16 auf, der zusammen mit einem Umluft-Ansaugkanal 18 in den Einlass 20 eines Gebläses 22 einmündet. Der Umluft-Ansaugkanal 18 ist bei 24 zum bodennahen Bereich 26 des Innenraums 12 hin offen, so dass über diesen Umluft-Ansaugkanal 18 Luft aus dem Innenraum 12 des Fahrzeuges 14 angesaugt wird. Vor dem Einlass 20 des Gebläses 22 befindet sich eine Umluft/Frischluftklappe 28, die motorisch zwischen einer Umluft-Position und einer Frischluft-Position verstellbar ist. In der Umluft-Position ist der Frischluft-Ansaugkanal 16 durch die Umluft-Frischluftklappe 28 abgesperrt, während in der Frischluft-Position der Umluft-Ansaugkanal 18 abgesperrt ist.

Die vom Gebläse 22 angesaugte Luft wird einer luftseitig gesteuerten Kühl/Heizvorrichtung mit einem Kühlregister 30, einem Heizregister 31, einer zu diesem parallelen Bypass-Leitung 32 und einer Mischerklappe 33 zugeführt, von wo aus sie über ein Luftverteilungssystem 34 mit Verteilerklappen 35,36 entweder über die Mannanströmöffnungen 38, die Defrosteröffnungen 40 oder die Fußraumausblasöffnungen 42 dem Innenraum 12 zugeführt wird.

Die Klimaanlage 10 umfasst ferner diverse Sensoren, bei denen es sich um einen Außentemperatursensor 44, einen Innenraumtemperatursensor 46, einen Ausblastemperatursensor 48 und einen Sonnensensor 50 handelt. Diese Sensoren 44 bis 50 sind mit den Eingängen einer Steuereinheit 52 einer Steuerungsvorrichtung 54 verbunden, deren Ausgänge mit Stellgliedern für die Umluft/Frischluftklappe 28, die Mischerklappe 33 der Heiz/Kühlvorrichtung 29 sowie den Luftverteilerklappen 35,36 mit dem Gebläse 22 verbunden sind. Die Steuerungsvorrichtung 54 ist in einem Steuergerät 56 untergebracht, das sich im Fahrzeuginnenraum 12 befindet und neben dem Innenraumtemperatursensor 46 auch diverse Bedienelemente unter anderem für den Sollwert der Innenraumtemperatur aufweist.

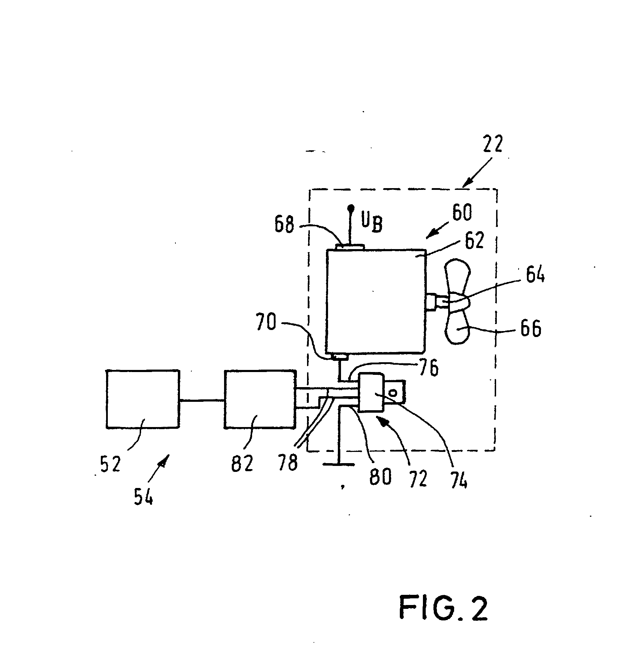

Anhand von Fig. 2 soll nachfolgend die Funktion der Steuereinheit 52 näher erläutert werden.

Die elektrische Beschaltung des Motors 60 des Gebläses 22 zeigt Fig. 2. Der Motor 60 weist ein Gehäuse 62 und eine drehend antreibbare Welle 64 auf, an der das Lüfterrad 66 angebracht ist. Am Gehäuse 62 des Motors 60 befinden sich mehrere elektrische Anschlüsse 68,70, von denen einer mit der Betriebsspannung und der andere über einen Treibertransistor 72 mit Masse verbunden ist. Der Treibertransistor 72 weist ein Gehäuse 74 mit mehreren Anschlussstiften 76,78 und 80 auf. Der elektrisch mit dem Motoranschluss 70 zu verbindende Transistor-Anschlussstift 76 ist mit diesem direkt elektrisch und mechanisch verbunden. Der Transistor-Anschlussstift 80 ist mit Masse verbunden und die übrigen Transistor-Anschlussstifte 78 sind mit einer elektronischen Ansteuerschaltung 82 verbunden. Der Transistor 72 verfügt über einen (nicht dargestellten) Temperatursensor, dessen Ausgangssignal in der elektronischen Ansteuerschaltung 82 verarbeitet wird, die mit der Steuerschaltung 52 der Steuereinheit 54 der Klimaanlage 10 verbunden ist. Durch die direkte mechanische Verbindung des Transistors 72 mit dem Motoranschluss 70 über den Transistor-Anschlussstift 76 wird der Transistor 72 mit dem Motor 60 thermisch gekoppelt. Über diese thermische Kopplung (Transistor-Anschlussstift 76) gelangt Wärme vom Motor 60 zum Transistor 72. Heizt sich also der Motor 60 übermäßig auf, was beispielsweise bei einer elektrischen Überbelastung des Motors 60 der Fall ist, so wird dies von dem Temperatursensor des Transistors 72 erfasst und der elektrischen Ansteuerschaltung 82 gemeldet.

Damit spricht der Temperaturüberschutz des Transistors 72 auch dann an, wenn der Motor 60 elektrisch überangesteuert ist. Auf diese Weise kann also automatisch reagiert werden, wenn beispielsweise der Motor 60 blockiert. In einem solchen Fall wird demzufolge der Motor 60 automatisch abgeschaltet, da der Transistor 72 mit einem geringen Strom beaufschlagt wird, indem beim Ansprechen des Temperaturüberschutzes der Transistor 72 von der elektronischen Ansteuerschaltung 82 mit einem geringeren Ansteuerungsstrom versorgt wird.

### BEZUGSZEICHENLISTE

- 10: Klimaanlage
- 12: Innenraum
- 14: Pkw
- 16: Frischluft-Ansaugkanal
- 18: Umluft-Ansaugkanal
- 20: Gebläseeinlass
- 22: Gebläse
- 26: Bodenbereich des Innenraums
- 28: Umluft/Frischluftklappe
- 30: Kühlregister
- 31: Heizregister
- 32: Heizregister-Bypass
- 33: Mischerklappe
- 34: Luftverteilungssystem
- 35: Verteilerklappe
- 36: Verteilerklappe
- 38: Mannanströmöffnungen
- 40: Defrosteröffnungen
- 42: Fußraumausblasöffnungen
- 44: Außentemperatursensor
- 46: Innenraumtemperatursensor
- 48: Ausblastemperatursensor
- 50: Sonnensensor
- 52: Steuereinheit
- 54: Steuerungsvorrichtung
- 56: Steuergerät
- 60: Motor
- 62: Gehäuse, Motorgehäuse
- 64: Welle
- 66: Lüfterrad
- 68: Anschlüsse
- 70: Anschlüsse, Motoranschluss
- 72: Treibertransistor, Transistor
- 74: Gehäuse, Transistorgehäuses
- 76: Anschlussstift, Transistor-Anschlussstift
- 78: Anschlussstift, Transistor-Anschlussstift
- 80: Anschlussstift, Transistor-Anschiussstift
- 82: Ansteuerschaltung

## Patentansprüche

1. Verfahren zum Schützen eines Gebläsemotors zum Erzeugen eines in den Innenraum eines Fahrzeuges zu leitenden Luftstroms vor zu hohen Temperaturen, wobei
- der Gebläsemotor (60) über einen mit einem Temperaturschutz versehenen Treibertransistor (72) mit elektrischer Energie versorgt wird und
- der Transistor (72) mit dem Motor (60) thermisch gekoppelt ist,
**dadurch gekennzeichnet,**
- **dass** der Transistor (72) beim Ansprechen des Übertemperaturschutzes, d.h. beim Erreichen zu hoher Temperaturen des Gebläsemotors (60) und/oder des Treibertransistors (72), mit einem geringeren Anstenerungstrom Versorgt wird.

2. Verfahren nach Anspruch 1, **dadurch gekennzeichnet, dass** der Gebläsemotor (60) beim Erreichen zu hoher Temperaturen des Gebläsemotors (60) und/oder des Treibertransistors (72) abgeschaltet wird.

3. Verfahren nach Anspruch 1 oder 2, **dadurch gekennzeichnet**, das der Transistor (72) mit dem Gehäuse (62) des Gebläsemotors (60) thermisch gekoppelt wird.

4. Verfahren nach einem der vorhergehenden Ansprüche, **dadurch gekennzeichnet, dass** ein Transistor (72) verwendet wird, der mit einem Kühlelement versehen ist und das Kühlelement mit dem Motor (60) thermisch gekoppelt wird.

5. Verfahren nach einem der vorhergehenden Ansprüche, **dadurch gekennzeichnet, dass** ein Transistor (72) verwendet wird, der ein Transistorgehäuse (74) mit Anschlüssen (76,78,80) aufweist, wobei einer der Anschlüsse (76,78,80) des Transistorgehäuses (74) unmittelbar mit einem elektrischen Anschluss (68,70) des Motors (60) verbunden wird und damit der Transistor (72) und der Gebläsemotor (60) sowohl elektrisch verbunden als auch thermisch gekoppelt wird.

## Claims

1. Method for protecting a fan motor for generating an air flow to be directed into the interior of a vehicle from excessive temperatures, wherein
- the fan motor (60) is supplied with electrical energy via a driver transistor (72) provided with an overheating protection means, and
- the transistor (72) is thermally coupled with the motor (60),
**characterized in that**
- upon response of the excess-temperature protection means, i. e. when excessive temperatures of the fan motor (60) and/or the driver transistor (72) are reached, the the transistor (72) is supplied with a smaller driving current.

2. Method according to claim 1, **characterized in that** the fan motor (60) is cut off when an excessive temperature of the fan motor (60) and/or the driver transistor (72) is reached.

3. Method according to claim 1 or 2, **characterized in that** the transistor (72) is thermally coupled with the casing (62) of the fan motor (60).

4. Method according to one of the preceding claims, **characterized in that** a transistor (72) is used which is provided with a cooling element, and the cooling element is thermally coupled with the motor (60).

5. Method according to one of the preceding claims, **characterized in that** a transistor (72) is used which comprises a transistor casing (74) provided with connections (76,78,80), wherein one of the connections (76,78,80) of the transistor casing (74) is directly connected with an electrical connection (68,70) of the motor (60), and thus the transistor (72) and the fan motor (60) are both electrically connected and thermally coupled.

## Revendications

1. Procédé de protection d'un moteur de ventilateur destiné à générer un courant d'air à conduire dans l'habitacle d'un véhicule contre des températures trop élevées, moyennant quoi
- le moteur de ventilateur (60) est alimenté en énergie électrique au moyen d'un transistor d'attaque (72) pourvu d'une protection thermique et
- le transistor (72) est couplé thermiquement avec le moteur (60),
**caractérisé en ce que**
- le transistor (72) est alimenté avec un courant d'excitation assez faible lors du déclenchement de la protection de surchauffe, c'est-à-dire lorsqu'on atteint des températures trop élevées pour le moteur de ventilateur (60) et/ou le transistor d'attaque (72).

2. Procédé selon la revendication 1, **caractérisé en ce que** le moteur de ventilateur (60) est déconnecté lorsqu'on atteint des températures trop élevées pour le moteur de ventilateur (60) et/ou le transistor d'attaque (72).

3. Procédé selon la revendication 1 ou 2, **caractérisé en ce que** le transistor (72) est couplé thermiquement avec le carter (62) du moteur de ventilateur (60).

4. Procédé selon l'une quelconque des revendications précédentes, **caractérisé en ce qu'**on utilise un transistor (72) qui est pourvu d'un élément réfrigérant et l'élément réfrigérant est couplé thermiquement avec le moteur (60).

5. Procédé selon l'une quelconque des revendications précédentes, **caractérisé en ce qu'**on utilise un transistor (72) qui présente un boîtier de transistor (74) avec des branchements (76, 78, 80), moyennant quoi l'un des branchements (76, 78, 80) du boîtier de transistor (74) est relié directement à un branchement (68, 70) électrique du moteur et de ce fait le transistor (72) et le moteur de ventilateur (60) est aussi bien relié électriquement que couplé thermiquement.
